# FASCICULE DE BREVET EUROPEEN

(11) **EP 0 756 960 B1**
(45) Date de publication et mention de la délivrance du brevet: **27.01.1999**
(21) Numéro de dépôt: 96401564.8
(22) Date de dépôt: 15.07.1996
(51) Int. Cl.: B60N 2/20

(54) **Siège de véhicule automobile**
Kraftfahrzeugsitz
Vehicle seat

(30) Priorité: 03.08.1995 FR 9509479
(43) Date de publication de la demande: 05.02.1997
(73) Titulaire: AUTOMOBILES PEUGEOT, 75116 Paris (FR); AUTOMOBILES CITROEN, 92200 Neuilly-sur-Seine (FR)
(72) Inventeur: Faivre, Philippe, 92360 Meudon la Foret (FR); Jacquemot, Pierre, 92250 La Garenne-Colombes (FR)
(74) Mandataire: Lanceplaine, Jean-Claude

(56) Documents cités:
- BE-A- 338 530
- CH-A- 287 456
- DE-A- 4 336 710
- FR-A- 806 453
- FR-A- 2 671 530
- GB-A- 318 676
- GB-A- 699 609
- US-A- 2 082 297
- US-A- 3 265 435
- US-A- 3 877 746
- US-A- 5 362 124

## Description

La présente invention a pour objet un siège de véhicule automobile, du type comportant un dossier et une assise orientables simultanément dans le sens de la marche du véhicule ou dans le sens inverse à la marche de ce véhicule (cf. par exemple US-A-3 877 746, correspondant au préambule de la revendication indépendante).

Certains véhicules automobiles sont équipés de sièges pouvant être orientés dans le sens de la marche ou dans le sens inverse et qui sont, pour cela, montés sur un plateau tournant.

Mais ce genre de sièges demande, pour sa rotation, un environnement dégagé.

On connaît également des sièges qui comportent un dossier relié à l'assise par des bielles permettant de basculer ledit dossier entre une première position correspondant au sens de la marche du véhicule et une seconde position correspondant au sens inverse à la marche de ce véhicule (cf. par exemple CH-A-287 456).

Mais, les systèmes de basculement utilisés jusqu'à présent sont complexes et ne permettent pas d'incliner l'assise en fonction de la position du dossier si bien que le passager se trouve dans une position inconfortable lorsque ce dossier est orienté dans le sens inverse à la marche du véhicule.

L'invention a pour but d'éviter les inconvénients précédemment mentionnés en proposant un siège de véhicules automobiles comportant un dossier et une assise basculables simultanément et dont les mouvements lors du basculement décrivent une cinématique qui n'interfère pas avec l'environnement du siège et qui n'encombre pas la zone située entre l'assise et le plancher du véhicule.

L'invention a donc pour objet un siège de véhicule automobile, du type comportant une assise munie d'une armature montée sur un soubassement fixé sur le plancher du véhicule et un dossier muni d'une armature montée basculante sur le soubassement par un système à bielles disposé de chaque côté du siège, entre une première position située dans le sens de la marche du véhicule et une seconde position située dans le sens inverse à la marche de ce véhicule, l'armature de l'assise étant montée basculante sur le soubassement par un axe transversal situé sensiblement au milieu de ladite armature de l'assise, caractérisé en ce que ladite armature de l'assisse comporte à chacune de ses extrémités un organe d'appui sur le soubassement et en ce que chaque système à bielles est formé par une première bielle prolongeant vers le bas l'armature du dossier, une seconde bielle montée articulée à ses extrémités respectivement sur le soubassement et sur l'extrémité supérieure de la première bielle et une troisième bielle dont une première extrémité est montée articulée sur le soubassement et dont une seconde extrémité est reliée à la première bielle par une liaison à pivot glissant, ladite seconde bielle et ladite troisième bielle étant reliée entre elles par une liaison à pivot glissant.

Selon d'autres caractéristiques de l'invention :
- un des organes d'appui de l'armature de l'assise est formé, de chaque côté de ladite assise, par une butée coopérant avec une lumière ménagée dans le soubassement et l'autre desdits organes d'appui est formé, de chaque côté de l'assise, par une butée coopérant avec une encoche ménagée dans ledit soubassement,
- l'axe transversal de basculement de l'assise, l'extrémité de la seconde bielle articulée sur le soubassement et l'extrémité de la troisième bielle articulée sur ledit soubassement sont situés sensiblement dans un même plan vertical, l'extrémité de la troisième bielle articulée sur le soubassement étant située entre l'axe transversal et l'extrémité de la seconde bielle articulée sur ce soubassement,
- la liaison à pivot glissant entre les première et troisième bielles est formée par un pivot solidaire de la première bielle et par une lumière ménagée dans la troisième bielle et coopérant avec ledit pivot,
- la liaison à pivot glissant entre les seconde et troisième bielle est formée par un pivot solidaire de la troisième bielle et par une lumière ménagée dans la seconde bielle et coopérant avec ledit pivot,
- le siège comporte des moyens de verrouillage du dossier dans chacune desdites positions,
- les moyens de verrouillage comprennent, d'une part, deux crochets montés pivotants sur l'une des faces latérales du soubassement et destinés à coopérer chacun avec une gâche fixée à la partie inférieure de la première bielle de l'un des systèmes à bielles, l'un des crochets étant situé sensiblement à l'aplomb de la première position du dossier et l'autre desdits crochets étant situé sensiblement à l'aplomb de la seconde position dudit dossier, et, d'autre part, un organe de commande du déverrouillage de chaque crochet de ladite gâche,
- l'organe de commande du déverrouillage de chaque crochet est formé par une manette montée pivotante sur la seconde bielle et par une came reliée à ladite manette et montée pivotante sur ladite seconde bielle.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue schématique en élévation d'un siège selon l'invention, en position dans le sens de la marche du véhicule,
- les Figs. 2 et 3 sont des vues schématiques à plus grande échelle des moyens de verrouillage du siège, respectivement en position de verrouillage et en position de déverrouillage,
- la Fig. 4 est une vue schématique en élévation d'un siège selon l'invention, en position inverse au sens de la marche du véhicule,
- la Fig. 5 est une vue schématique en élévation du siège selon l'invention montrant les caches du système à bielles de basculement de ce siège.

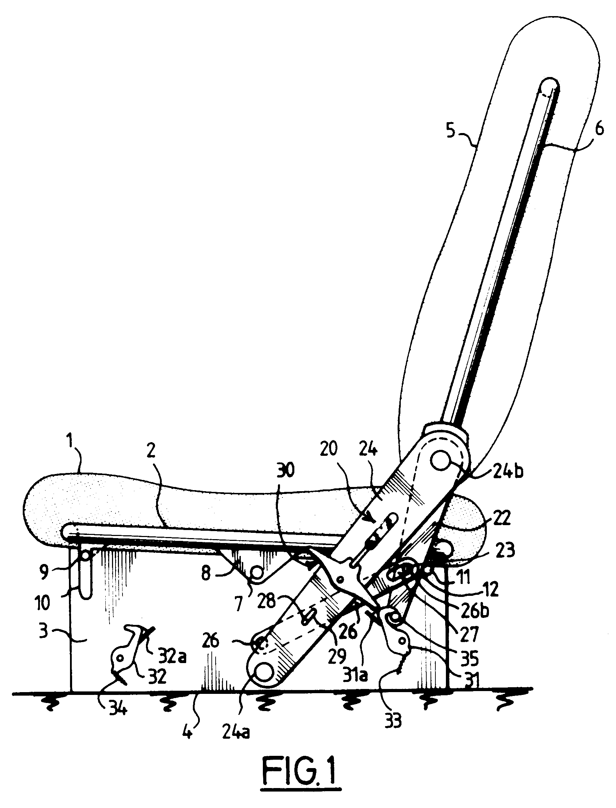

Comme représenté à la Fig. 1, le siège se compose d'une assise 1 munie d'une armature 2 montée sur un soubassement 3 fixé sur le plancher 4 du véhicule automobile et, d'autre part, d'un dossier 5 muni d'une armature 6.

Le dossier 5 est inclinable de telle manière que le passager puisse régler l'inclinaison de ce dossier en fonction de sa morphologie.

L'assise 1 et le dossier 5 du siège selon l'invention sont basculables simultanément dans le sens normal de la marche du véhicule ou dans le sens inverse à la marche de ce véhicule.

A cet effet, l'armature 2 de l'assise 1 est montée basculante sur le soubassement 3 par l'intermédiaire d'un axe transversal 7 situé sensiblement au milieu de l'armature 2 et relié à celle-ci par des platines 8.

D'autre part, l'armature 2 de l'assise 1 comporte à chacune de ses extrémités un organe d'appui sur le soubassement 3.

Un premier organe d'appui de l'armature 2 de l'assise 1 est formé, de chaque côté de ladite assise 2, par une butée 9 coopérant avec une lumière 10 ménagée dans le soubassement 3.

Un second organe d'appui de l'armature 2 de l'assise 1 est formé, de chaque côté de ladite assise 1, par une butée 11 coopérant avec une encoche 12 ménagée dans ledit soubassement 3.

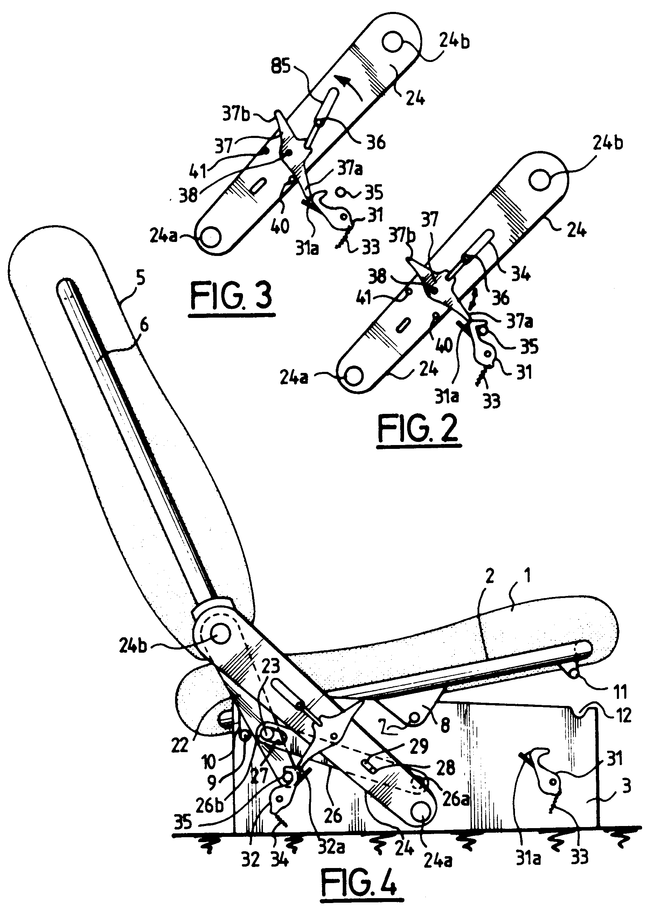

L'armature 6 du dossier 5 est montée basculante sur le soubassement 3 par l'intermédiaire d'un système à bielles 20 disposé de chaque côté du siège, entre une première position située dans le sens de la marche du véhicule (Fig. 1) et une seconde position située dans le sens inverse à la marche du véhicule (Fig. 4).

Dans ce qui suit, on va décrire un système à bielles 20 d'un côté du siège, l'autre système à bielles de l'autre côté de ce siège étant identique.

Chaque système de bielles 20 est formé par trois bielles, respectivement 22, 24 et 26.

La première bielle 22 prolonge vers le bas l'armature 6 du dossier 5 et est destinée à coopérer avec des moyens de verrouillage du dossier 5 dans chacune de ses positions, comme on le verra ultérieurement.

La seconde bielle 24 a une première extrémité 24a montée articulée sur le soubassement 3 et une seconde extrémité 24b montée articulée sur l'extrémité supérieure de la première bielle 22 au niveau de l'axe de pivotement du dossier 5.

La troisième bielle 26 a une première extrémité 26a montée articulée sur le soubassement 3 et une seconde extrémité 26b reliée à la première bielle 22 par une liaison à pivot glissant.

Cette liaison à pivot glissant entre la première bielle 22 et la troisième bielle 26 est formée par un pivot 23 solidaire de la première bielle 22 et par une lumière 27 ménagée dans la troisième bielle 26 et coopérant avec ledit pivot 23.

De plus, la seconde bielle 24 et la troisième bielle 26 sont reliées entre elles par une liaison à pivot glissant formée par un pivot 28 solidaire de la troisième bielle 26 et par une lumière 29 ménagée dans la seconde bielle 24 et coopérant avec ledit pivot 28.

L'axe transversal 7 de basculement de l'assise 1, l'extrémité 24a de la seconde bielle 24 articulée sur le soubassement 3 et l'extrémité 26a de la troisième bielle 26 articulée sur le soubassement 3 sont situés sensiblement dans un même plan vertical.

L'extrémité 26a de la troisième bielle 26 est située entre l'axe transversal 7 et l'extrémité 24a de la seconde bielle 24.

Le siège comporte également des moyens 30 de verrouillage du dossier 5 dans la position située dans le sens de la marche du véhicule et dans la position située dans le sens inverse à la marche de ce véhicule.

Les moyens 30 de verrouillage sont situés uniquement d'un côté du soubassement 3 et coopèrent avec le système à bielles 20 situé de ce même côté.

Ces moyens 30 de verrouillage comprennent deux crochets, respectivement 31 et 32, montés pivotants chacun sur l'une des faces latérales du soubassement 3.

Chaque crochet 31 et 32 est rappelé dans la position de verrouillage par un ressort, respectivement 33 et 34, et est destiné à coopérer avec une gâche 35 fixée à la partie inférieure de la première bielle 22.

Le premier crochet 31 est situé sensiblement à l'aplomb de la première position du dossier 5 et le second crochet 32 est situé sensiblement à l'aplomb de la seconde position dudit dossier 5.

Les moyens 30 de verrouillage comprennent également un organe de commande du déverrouillage de chaque crochet 31 et 32 de la gâche 35.

Ainsi que représenté sur les figures 2 et 3, l'organe de commande du déverrouillage de chaque crochet 31 et 32 est formé par une manette 85 montée pivotante autour d'un point d'articulation 36 sur la seconde bielle 24 et par une came 37 reliée à ladite manette 85 et montée pivotante autour d'un point d'articulation 38 sur ladite seconde bielle 24.

La came 37 comporte une première partie active 37a destinée à coopérer avec une palette 31a portée par le crochet 31 pour déverrouiller ce crochet 31 de la gâche 35 lorsque le dossier 5 ce trouve dans une position correspondant au sens de la marche du véhicule, comme représentée à la Fig. 1 et une seconde partie active 37b opposée à la première partie active 37a et destinée à coopérer avec une palette 32a portée par le crochet 32 pour déverrouiller ce crochet 32 lorsque le dossier 5 se trouve dans la position correspondant au sens inverse à la marche du véhicule, comme représentée à la Fig. 4.

Le mouvement de la came 37 est limité d'un côté par une butée 40 et de l'autre côté par une butée 41, ces butées 40 et 41 étant portées par la seconde bielle 24.

Le basculement simultané de l'assise 1 et du dossier 5 dans l'une ou l'autre position s'effectue de la façon suivante.

Lorsque le dossier 5 se trouve dans une position correspondant au sens de la marche du véhicule, la butée 11 est en appui dans l'encoche 12 et la butée 9 est positionnée dans la glissière / lumière 10.

Pour basculer l'assise 1 et le dossier 5 de la position correspondant au sens de la marche du véhicule, comme représentée à la Fig. 1, dans la position correspondant au sens inverse à la marche du véhicule comme représentée à la Fig. 4, le passager agit sur la manette 85 pour que la partie active 37a de la came 37 déplace le crochet 31 par l'intermédiaire de la palette 31a et libère ainsi ledit crochet 31 de la gâche 35 portée par la première bielle 22.

Ensuite, il suffit au passager de prolonger l'action exercée sur la manette 85 pour que la seconde bielle 24 entame sa rotation autour du point de pivotement de l'extrémité 24a.

Simultanément, la troisième bielle 26, par l'intermédiaire de la liaison entre le pivot 28 et la lumière 29, entame sa rotation autour de l'axe de pivotement de l'extrémité 26a de ladite seconde bielle 26 ce qui a pour effet par l'intermédiaire du pivot 28 et de la lumière 29 de provoquer le basculement de l'armature 6 et du dossier 5.

Le point de rotation de l'extrémité 24b de la première bielle 24 constitue également l'axe de rotation de la commande d'inclinaison du dossier 5.

Le mouvement synchrone des bielles 22, 24 et 26 continue jusqu'à la position correspondant à la position inverse à la marche du véhicule comme représentée à la Fig. 4, où la première bielle 22 provoque le déplacement de la butée 9 dans la lumière 10.

Ce mouvement fait basculer l'armature 2 de l'assise 1 autour de l'axe transversal 7 et dégage la butée 11 de l'encoche 12 ainsi que représenté à la Fig. 4.

En fin de basculement, la butée 9 vient en appui dans le fond de la lumière 10 du soubassement 3 et le crochet 32 verrouille l'ensemble par l'intermédiaire de la gâche 35 et rattrape une partie des jeux engendrés par les lumières, respectivement 27 et 29.

Les ressorts, respectivement 33 et 34, maintiennent les crochets, respectivement 31 et 32, en position de verrouillage.

Lorsque le passager désire basculer l'assise 1 et le dossier 5 dans l'autre position, il suffit au passager d'agir sur la manette 85 pour déverrouiller le crochet 32 et de faire basculer le dossier 5 dans l'autre position.

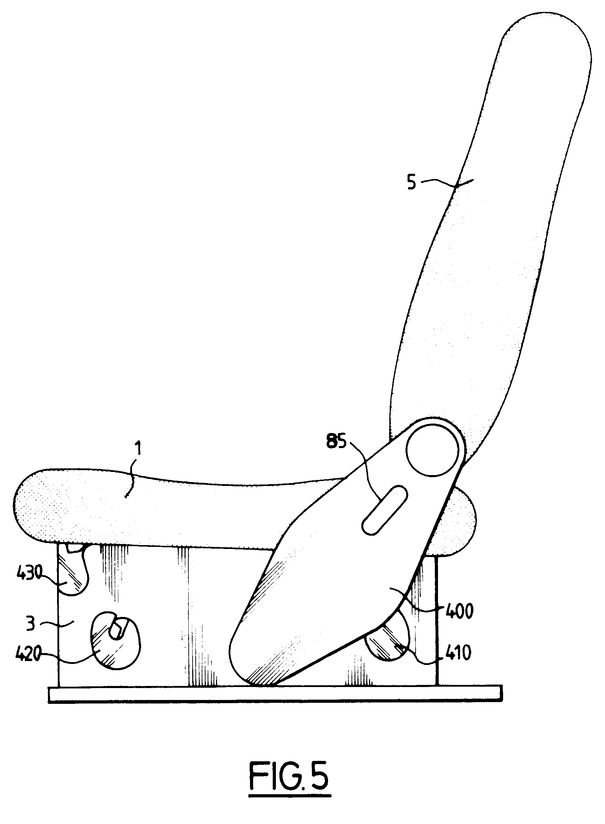

Ainsi que représenté à la Fig. 5, des caches, respectivement 400, 410, 420 et 430 sont placés sur les systèmes à bielles 20, les crochets 31 et 32 et la lumière 10.

Le siège selon l'invention permet, par des moyens simples, d'obtenir un basculement simultané de l'assise et du dossier sans encombrer la zone située entre l'assise et le plancher du véhicule ce qui permet d'intégrer par exemple un tiroir dans cette zone, tout en décrivant une cinématique dont le mouvement n'interfère pas avec l'environnement de ce siège.

## Revendications

1. Siège de véhicule automobile, du type comportant une assise (1) munie d'une armature (2) montée sur un soubassement (3) fixé sur le plancher du véhicule et un dossier (5) muni d'une armature (6) montée basculante sur le soubassement (3) par un système à bielles (20) disposé de chaque côté du siège, entre une première position située dans le sens de la marche du véhicule et une seconde position située dans le sens inverse de la marche du véhicule, l'armature (2) de l'assise (1) étant montée basculante sur le soubassement (3) par un axe transversal (7) situé sensiblement au milieu de ladite armature (2) de l'assise (1), caractérisé en ce que ladite armature (2) de l'assise (1) comporte, à chacune de ses extrémités, un organe d'appui (9, 11) sur le soubassement (3) et en ce que chaque système à bielles (20) est formé par une première bielle (22) prolongeant vers le bas l'armature (6) du dossier (5), une seconde bielle (24) montée articulée à ses extrémités (24a, 24b) respectivement sur le soubassement (3) et sur l'extrémité supérieure de la première bielle (22) et une troisième bielle (26) dont une première extrémité (26a) est montée articulée sur le soubassement (3) et dont une seconde extrémité (26b) est reliée à la première bielle (22) par une liaison à pivot glissant (23, 27), ladite seconde bielle (24) et ladite troisième bielle (26) étant reliée entre elles par une liaison à pivot glissant (28, 29).

2. Siège de véhicule automobile selon la revendication 1, caractérisé en ce qu'un des organes d'appui de l'armature (2) de l'assise (1) est formé, de chaque côté de ladite assise (1), par une butée (9) coopérant avec une lumière (10) ménagée dans le soubassement (3) et l'autre desdits organes d'appui est formé, de chaque côté de ladite assise (1), par une butée (11) coopérant avec une encoche (12) ménagée dans ledit soubassement (3).

3. Siège de véhicule automobile selon la revendication 1, caractérisé en ce que l'axe transversal (7) de basculement de l'assise (1), l'extrémité (24a) de la seconde bielle (24) articulée sur le soubassement (3) et l'extrémité (26a) de la troisième bielle (26) articulée sur ledit soubassement (3) sont situés sensiblement dans un même plan vertical, l'extrémité (26a) de la troisième bielle (26) articulée sur le soubassement (3) étant située entre l'axe transversal (7) et l'extrémité (24a) de la seconde bielle (24) articulée sur ce soubassement (3).

4. Siège de véhicule automobile selon la revendication 1, caractérisé en ce que la liaison à pivot glissant entre les première et troisième bielles (22, 26) est formée par un pivot (23) solidaire de la première bielle (22) et par une lumière (27) ménagée dans la troisième bielle (26) et coopérant avec ledit pivot (23).

5. Siège de véhicule automobile selon la revendication 1, caractérisé en ce que la liaison à pivot glissant entre les seconde et troisième bielle (24, 26) est formé par un pivot (28) solidaire de la troisième bielle (26) et par une lumière (29) ménagée dans la seconde bielle (24) et coopérant avec ledit pivot (28).

6. Siège de véhicule automobile selon la revendication 1, caractérisé en ce qu'il comporte des moyens (30) de verrouillage du dossier (5) dans chacune desdites positions.

7. Siège de véhicule automobile selon les revendications 1 et 6, caractérisé en ce que les moyens (30) de verrouillage comprennent, d'une part, deux crochets (31, 32) montés pivotants sur l'une des faces latérales du soubassement (3) et destinés à coopérer chacun avec une gâche (35) fixée à la partie inférieure de la première bielle (22) de l'un des systèmes à bielles (20), l'un (31) des crochets étant situé sensiblement à l'aplomb de la première position du dossier (5) et l'autre (32) desdits crochets étant situés sensiblement à l'aplomb de la seconde position dudit dossier (5), et d'autre part, un organe de commande (85, 37) du déverrouillage de chaque crochet (31, 32) de ladite gâche (35).

8. Siège de véhicule automobile selon les revendications 1 et 6, caractérisé en ce que l'organe de commande du déverrouillage de chaque crochet (31, 32) est formé par une manette (85) montée pivotante sur la seconde bielle (24) et par une came (37) reliée à ladite manette (35) et montée pivotante sur ladite seconde bielle (24).

## Claims

1. Seat for an automobile vehicle, of the type comprising a seat portion (1) fitted with a reinforcement (2) mounted on a substructure (3) fixed on the floor of the vehicle, and a back portion (5) fitted with a reinforcement (6) mounted to tilt on the substructure (3) by means of a connecting rod system (20) disposed on either side of the seat, between a first position located in the direction of travel of the vehicle and the second position located in the direction opposite to the travel of the vehicle, the reinforcement (2) of the seat portion (1) being mounted to tilt on the substructure (3) by means of a transverse axis (7) located substantially in the centre of the said reinforcement (2) of the seat portion (1), the said reinforcement (2) of the seat portion (1) comprising, at each of its ends, a support member (9;11) on the substructure (3), and in that each connecting rod system (20) is formed by a first connecting rod (22) extending downwards the reinforcement (6) of the back portion (5), a second connecting rod (24) mounted to articulate at its ends (24a,24b) respectively on the substructure (3) and on the upper end of the first connecting rod (22) and a third connecting rod (26), one first end (26a) of which is mounted to articulate on the substructure (3), and a second end (26b) of which is connected to the first connecting rod (22) by a sliding pivot connection (23,27), the said second connection rod (24) and the said third connecting rod (26) being interconnected by a sliding pivot connection (28,29).

2. Seat for an automobile vehicle according to claim 1, characterised in that one of the support members of the reinforcement (2) of the seat portion (1) is formed, on either side of the said seat portion (1), by a stop means (9), co-operating with an aperture (10) provided in the substructure (3), and the other of the said support members is formed, on either side of the said seat portion (1), by a stop means (11) co-operating with a notch (12) provided in the said substructure (3).

3. Seat for an automobile vehicle according to claim 1, characterised in that the transverse tilting axis (7) of the seat portion (1), the end (24a) of the second connecting rod (24) articulated on the substructure (3) and the end (26a) of the third connecting rod (26) articulated on the said substructure (3) are located substantially in the same vertical plane, the end (26a) of the third connecting rod (26) articulated on the substructure (3) being located between the transverse axis (7) and the end (24a) of the second connecting rod (24) articulated on this substructure (3).

4. Seat for an automobile vehicle according to claim 1, characterised in that the sliding pivot connection between the first and third connecting rods (22,26) is formed by a pivot (23) integral with the first connecting rod (22) and by an aperture (27) provided in the third connecting rod (26) and co-operating with the said pivot (23).

5. Seat for an automobile vehicle according to claim 1, characterised in that the sliding pivot connection between the second and third connecting rods (24,26) is formed by a pivot (28) integral with the third connecting rod (26) and by an aperture (29) provided in the second connecting rod (24) and co-operating with the said pivot (28).

6. Seat for an automobile vehicle according to claim 1, characterised in that it comprises a locking means (30) for the back portion (5) in each of the said positions.

7. Seat for an automobile vehicle according to claims 1 and 6, characterised in that the locking means (30) comprise on the one hand two hooks (31,32) mounted to pivot on one of the lateral faces of the substructure (3) and each intended to cooperate with a catch (35) secured to the lower portion of the first connecting rod (22) of one of the connecting rod systems (20), one (31) of the hooks being located substantially vertically to the first position of the back portion (5) and the other (32) of the said hooks being located substantially vertically to the second position of the said back portion (5), and on the other hand, an unlocking control means (85,37) for each hook (31,32) of the said catch (35).

8. Seat for an automobile vehicle according to claims 1 and 6, characterised in that the unlocking control means for each hook (31,32) is formed by a handle (85) mounted to pivot on the second connecting rod (24) and by a cam (37) connected to the said handle (85) and mounted to pivot on the said second connecting rod (24).

## Patentansprüche

1. Kraftfahrzeugsitz, bestehend aus einer Sitzfläche (1), die mit einem Beschlag (2) versehen ist, der auf einem Sockel (3) montiert ist, der auf dem Boden des Fahrzeuges befestigt ist, und einer Rückenlehne (5), die mit einem Beschlag (6) versehen ist, der auf dem Sockel (3) durch ein System von Stangen (20), das auf jeder Seite des Sitzes angeordnet ist, zwischen einer ersten Position, die sich in der Fahrtrichtung des Fahrzeuges und einer zweiten Position, die sich in der zu der Fahrtrichtung des Fahrzeuges entgegengesetzten Richtung befindet, kippbar montiert ist, wobei der Beschlag (2) der Sitzfläche (1) auf dem Sockel (3) kippbar durch eine Querachse (7) montiert ist, die sich im wesentlichen in der Mitte dieses Beschlages (2) der Sitzfläche (1) befindet, dadurch gekennzeichnet, daß der Beschlag (2) der Sitzfläche (1) an jedem seiner Enden ein Element zur Auflage (9; 11) auf dem Sockel (3) umfaßt und daß jedes Stangensystem (20) von einer ersten Stange (22), die den Beschlag (6) der Rückenlehne (5) nach unten verlängert, von einer zweiten Stange (24), die gelenkig an ihren Enden (24a, 24b) auf dem Sockel (3) bzw. auf dem oberen Ende der ersten Stange (22) montiert ist, und einer dritten Stange (26) gebildet wird, deren erstes Ende (26a) gelenkig auf dem Sockel (3) montiert ist und deren zweites Ende (26b) mit der ersten Stange (22) durch eine Gleitzapfenverbindung (23, 27) verbunden ist, wobei die zweite Stange (24) und die dritte Stange (26) miteinander durch eine Gleitzapfenverbindung (28, 29) verbunden sind.

2. Fahrzeugsitz nach Anspruch 1, dadurch gekennzeichnet, daß eines der Auflageelemente des Beschlages (2) der Sitzfläche (1) auf jeder Seite dieser Sitzfläche (1) von einem Anschlag (9) gebildet wird, der mit einer Öffnung (10) zusammenwirkt, die in dem Sockel (3) ausgespart ist, und das andere dieser Auflageelemente auf jeder Seite der Sitzfläche (1) von einem Anschlag (11) gebildet wird, der mit einer Kerbe (12), die in dem Sockel (3) ausgespart ist, zusammenwirkt.

3. Kraftfahrzeugsitz nach Anspruch 1, dadurch gekennzeichnet, daß sich die Querkippachse (7) der Sitzfläche (1), das Ende (24a) der zweiten Stange (24), das auf dem Sockel (3) gelenkig montiert ist, und das Ende (26a) der dritten Stange (26), das auf dem Sockel (3) gelenkig montiert ist, im wesentlichen in einer selben Vertikalebene befinden, wobei das Ende (26a) der dritten Stange (26), das auf dem Sockel (3) gelenkig montiert ist, zwischen der Querachse (7) und dem Ende (24a) der zweiten Stange (24), das auf diesem Sockel (3) gelenkig montiert ist, angeordnet ist.

4. Kraftfahrzeugsitz nach Anspruch 1, dadurch gekennzeichnet, daß die Gleitzapfenverbindung zwischen der ersten und der dritten Stange (22, 26) von einem Zapfen (23), der mit der ersten Stange (22) verbunden ist, und von einer Öffnung (27) gebildet wird, die in der dritten Stange (26) ausgespart ist und mit dem Zapfen (23) zusammenwirkt.

5. Kraftfahrzeugsitz nach Anspruch 1, dadurch gekennzeichnet, daß die Gleitzapfenverbindung zwischen der zweiten und der dritten Stange (24, 26) von einem Zapfen (28), der mit der dritten Stange (26) verbunden ist, und von einer Öffnung (29) gebildet wird, die in der zweiten Stange (24) ausgespart ist und mit dem Zapfen (28) zusammenwirkt.

6. Kraftfahrzeugsitz nach Anspruch 1, dadurch gekennzeichnet, daß er Mittel (30) zum Verriegeln der Rückenlehne (5) in jeder ihrer Positionen umfaßt.

7. Kraftfahrzeugsitz nach den Ansprüchen 1 und 6, dadurch gekennzeichnet, daß die Verriegelungsmittel (30) einerseits zwei Haken (31, 32), die schwenkbar auf einer der Seitenflächen des Sockels (3) montiert sind und dazu bestimmt sind, jeweils mit einem Schließhaken (35) zusammenzuwirken, der auf dem unteren Teil der ersten Stange (22) eines der Stangensysteme (20) befestigt ist, wobei einer der Haken (31) im wesentlichen senkrecht zu der ersten Position der Rückenlehne (5) und der andere (32) der Haken im wesentlichen senkrecht zu der zweiten Position der Rückenlehne (5) angeordnet ist, und andererseits ein Element (85, 37) zur Steuerung der Entriegelung jedes Hakens (31, 32) aus dem Schließhaken (35) umfassen.

8. Kraftfahrzeugsitz nach den Ansprüchen 1 und 6, dadurch gekennzeichnet, daß das Element zur Steuerung der Entriegelung jedes Hakens (31, 32) von einem Griff (85), der schwenkbar auf der zweiten Stange (24) montiert ist, und von einer Nocke (37) gebildet wird, die mit dem Griff (85) verbunden ist und schwenkbar auf der zweiten Stange (24) montiert ist.
